# EUROPEAN PATENT SPECIFICATION

(11) **EP 2 607 148 B1**
(45) Date of publication and mention of the grant of the patent: **28.10.2015**
(21) Application number: 12198708.5
(22) Date of filing: 20.12.2012
(51) Int. Cl.: B60M 1/24, B60M 1/30

(54) **Clamp for suspending a section of a rigid catenary**
Klammer zur Aufhängung eines Abschnitts einer starre Oberleitung
collier de fixation d'un section d'un caténaire rigide

(30) Priority: 22.12.2011 ES 201131313 U
(43) Date of publication of application: 26.06.2013
(73) Proprietor: KLK Electro Materiales S.L.U., 33211 Tremañes-Gijon (ES)
(72) Inventor: Garcia Fernandez, Francisco, Gijon, Asturias (ES); Péréz Péréz, Victor, 33211 Gijon, Asturias (ES)
(74) Representative: Pons Ariño, Angel

(56) References cited:
- DE-A1- 3 202 846
- DE-C- 423 699
- FR-A- 958 946
- JP-A- H11 192 863
- JP-A- S60 104 430
- JP-A- 2008 239 029
- JP-B- S5 018 963
- JP-U- S52 111 108
- JP-Y1- S4 317 290
- US-A- 1 625 366

## Description

### OBJECT OF THE INVENTION

The present invention is included in the technical field of railway transport, specifically rail vehicle power supply by means of a rigid catenary. The object of the invention relates to a clamp for suspending a rigid catenary section, presenting an easier installation than those known in the prior art.

### BACKGROUND OF THE INVENTION

A rigid catenary is a support system for railway transport powered by electricity. The rigid catenary system is mainly used for electrification in tunnels, because the reduced tunnel gauges do not allow the placement of conventional catenary cables. Gauge is understood as the distance between the top of the arch of the tunnel and the axis of the track.

To install the rigid catenary system, aluminium catenary profile sections are laid. The rigid catenary profile sections are suspended from a bracket that runs in a direction substantially transverse to the direction of travel of the train or tram. To suspend the catenary profiles from the bracket, a device called a clamp assembly is used.

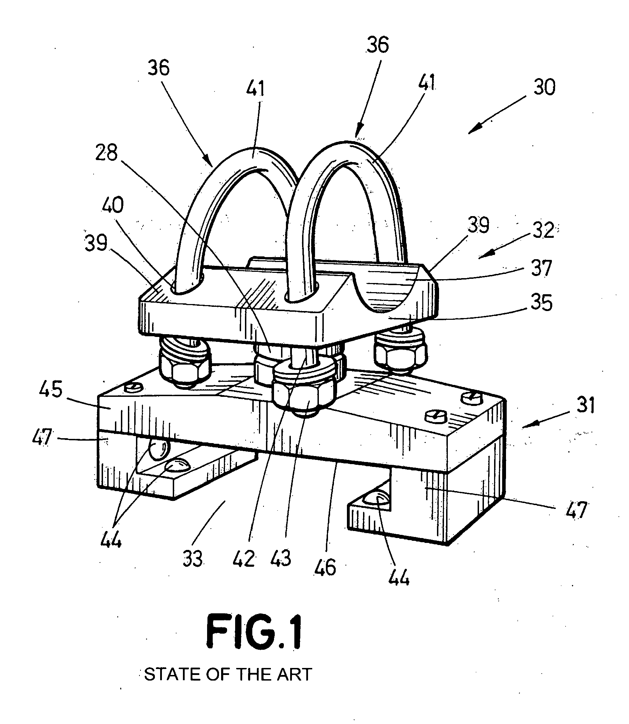

Figure 1 shows a known clamp assembly model (30) comprising a body (31) and a clamp (32), joined by a screw connection (28) that allows rotation between them. The body (31) has on its lower part a through groove (33) for housing and suspending a rigid catenary section profile (not shown). The body (31) comprises a piece (45), having screwed on its flat underside (46) replaceable inserts (47) that define the groove (33) jointly with said underside (46). The body (31) may further comprise sliding pivots (44), made of an elastic material, arranged inside the groove (33), to absorb any eventual expansion of the rigid catenary profile and to prevent friction with the body (31).

The clamp (32) comprises a base (35) and a pair of fasteners (36). The base (35) is provided with a central depression (37) longitudinally disposed and adapted to at least partially house a cylindrical bracket (not shown). The base (35) further comprises side portions (39) arranged longitudinally at the sides of the depression (37). Each of the side portions (39) comprises two through drill holes (40) facing the corresponding drill holes (40) on the other side portion (39). The fasteners (36) have a curved central portion (41) adapted so as to at least partially house the bracket, holding said bracket against the depression (37).

Each fastener (36) further comprises end portions (42) disposed one on each side of the central portion (41) and adapted to pass through each pair of drill holes (40) facing each other. Each of the end portions (42) is fixed by means of respective nuts (43) at the top, opposite the depression (37), of the body (31). Thus, the bracket is fixed between the central portions (41) of each fastener (36) and the depression (37) at the base (35), wherein the end portions (42) are displaceable along the drill holes (40), allowing the position of the fastening elements (36) to be regulated and set by means of the nuts (43) arranged on the body (31).

Document FR 958946 A discloses a clamp according to the preamble of claim 1.

A new clamp assembly model is described which presents a simpler structure and whose bracket assembly process is less time consuming.

### DESCRIPTION OF THE INVENTION

The present invention solves the aforementioned drawback by means of a clamp for suspending a rigid catenary profile section from a bracket for railway transport according to claim 1, wherein said clamp is intended to form part of a clamp assembly comprising, in addition to the clamp, a body provided with a groove to accommodate and suspend the rigid catenary profile section.

The body can take different configurations; in particular it may consist of a single piece which incorporates the groove at the lower part, although other configurations for the body are possible, such as, preferably, a body provided with a flat piece whose flat underside has (for example screwed) inserts defining the grooves jointly with said underside.

The body may further comprise sliding pivots, made of an elastic material, arranged inside the groove, to absorb any eventual expansion of the catenary profile and to prevent friction with the body.

The clamp of the clamp assembly is designed to attach said clamp assembly to a bracket. The clamp is linked to the body through a screw connection (28) that allows rotation between both parts.

The clamp comprises a first profile and a second profile which, in turn, comprise the respective first ends and the respective second ends, and a central section whose shape is adapted to embrace the bracket, said profiles pressing against said bracket. The first profile and the second profile are linked to each other by their first ends. The second ends have attachment means adapted so as to press the first profile and the second profile against the bracket. Preferably, the attachment means comprise a first bolt and a first nut, wherein the first bolt is arranged through the second ends to exert jointly with the first nut a force that tends to bring the second ends together.

The linkage between the two profiles is due to the fact that the first ends of the profiles are configured to define a prismatic pair (i.e., a linkage that allows parallel displacement only) between the first profile and the second profile. For this purpose, the first end of the first profile is flat and that the first end of the second profile has a U-shaped groove to slidably house the first end of the first profile.

The geometries of the central sections are adapted to jointly embrace the bracket. For example, for circular section tubular brackets (solid or hollow), the central sections are curved according to hollow cylinder portions.

As indicated above, the body and the clamp are pivotally linked. Preferably, one of the clamp profiles comprises on its second end a rectangular step adapted so as to move along a guide arranged for this purpose on the second end of another profile. A second bolt-nut assembly preferably serves as a swivel joint between the body and the clamp, wherein the first end of the bolt is inserted into the upper part of the body and the second end of the bolt passes through the plate where the nut is placed.

The clamp assembly of the invention is easily constructed and allows the positioning of a rigid catenary section along a bracket in a suitable position. Fixing the clamp to the bracket only requires the tightening of a single bolt (the first bolt). The clamp position along the bracket is variable, to allow even wear of the contact wire of the rigid catenary profile.

The contact surface between the profiles and the bracket is substantially greater than in the solution mentioned in the cited prior art, thereby increasing the friction between said profiles and said bracket, whereby at the same time the possibility of relative sliding between the profiles and the bracket is reduced.

### DESCRIPTION OF THE DRAWINGS

To supplement the description being made and for the sake of a better understanding of the characteristics of the invention according to a preferred example of practical embodiment thereof, attached as an integral part of said description, is a set of drawings wherein by way of illustration and not limiting the scope of the invention, the following has been represented:
Figure 1. - Shows a view of a clamp assembly included in the prior art.
Figure 2. - Shows a perspective view of a clamp assembly incorporating a clamp according to the present invention, wherein some parts have been cut open to more clearly show some interior elements.

### PREFERRED EMBODIMENT OF THE INVENTION

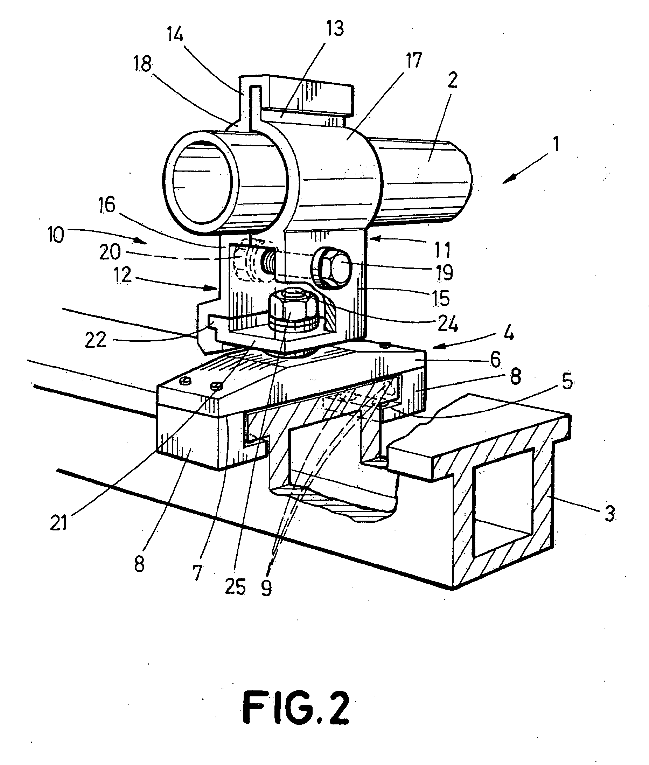

The following describes a preferred embodiment of the present invention with the aid of Figure 2 attached. The clamp assembly (1) for suspending a rigid catenary profile section (3) from a bracket (2) in railway transport, incorporating the clamp (10) according to the present invention, further comprises in addition to said clamp (10), a body (4) provided with a groove (5) for housing and suspending said rigid catenary profile section (3).

The body (4) is provided with a piece (6) having screwed on its flat underside (7) replaceable inserts (8) that define the grooves (5) jointly with said underside (7).

The body (4) further comprises sliding pivots (9), of an elastic material, arranged inside the groove (5), to absorb any eventual expansion of the rigid catenary profile (3) and to prevent friction with the body (4).

The clamp assembly (1) further comprises a clamp (10) for fixing said clamp assembly (1) to the bracket (2). The clamp (10) is linked to the body (4) by means of a swivel joint.

The clamp (10) comprises a first profile (11) and a second profile (12) which, in turn, comprise respective first ends (13, 14) and respective second ends (15, 16), as well as the respective central sections (17, 18) whose shape is adapted to embrace the bracket (2), pressing said profiles (11, 12) against said bracket (2). The first profile (11) and the second profile (12) are linked to each other by their first ends (13, 14). Specifically, the first ends (13, 14) are configured to define a prismatic pair between the first profile (11) and the second profile (12). To this end, the first end (13) of the first profile (11) is flat and the first end (14) of the second profile (12) has a U-shaped groove to house the first end (13) of the first profile (11).

The second ends (15, 16) have attachment means (19) adapted so as to press the first profile (11) and the second profile (12) against the bracket (12). The attachment means (19, 20) comprise a first bolt (19) and a first nut (20), wherein the first bolt (19) passes through the second ends (15,16) to exert jointly with the first nut (20) a force tending to bring the second ends (15, 16) together. The presence of a single first bolt (19) saves much time when suspending the bracket from the clamp (10) as compared to the solutions included in the prior art where it is necessary to tighten several bolts.

The central sections (17, 18) have a curved geometry according to hollow cylinder portions in order to embrace tubular brackets (2).

As indicated above, the body (4) and the clamp (10) are pivotally connected so that the first profile (11) comprises at its second end (15) a rectangular prismatic base (21) which is adapted at its free end (22) so as to move along a guide (not shown) arranged for this purpose at the second end (16) of the second profile (12). A second bolt (24) and a second nut (25) serve as swivel joint between the body (4) and the clamp (10), wherein the first end of the second bolt (24) is inserted into the upper part of the body (4) and its second end passes through the rectangular prismatic base (21) where the second nut (25) is placed.

## Claims

1. Clamp (10) for suspending a rigid catenary profile section (3) from a bracket (2) in railway transport, comprising:
a first profile (11) and a second profile (12), each having respective first ends (13, 14) and respective second ends (15, 16), as well as respective central sections (17, 18) whose shape is adapted so as to press and embrace the bracket (2), said profiles (11, 12) being linked to each other by their first ends (13, 14), wherein the second ends (15, 16) incorporate attachment means to press the profiles (11, 12) against the bracket (2), wherein
the first end (13) of the first profile (11) is flat and the first end (14) of the second profile (12) has a U-shaped groove to slidably house the first end (13) of the first profile (11),
**characterized in that** the first profile (11) comprises on its second end (15) a rectangular prismatic base (21) which at its free end (22) is adapted so as to move along a guide arranged for this purpose at the second end (16) of the second profile (12).

2. Clamp (10) for suspending a rigid catenary profile section (3) from a bracket (2) in railway transport, according to claim 1, **characterized in that** the attachment means (19, 20) comprise at least one first bolt (19) and a first nut (20), wherein the first bolt (19) passes through the second ends (15,16) to exert jointly with the first nut (20) a force tending to bring the second ends (15, 16) together.

3. Clamp (10) for suspending a rigid catenary profile section (3) from a bracket (2) in railway transport, according to claim 2, **characterized in that** the attachment means (19, 20) comprise less than four first bolts (19).

4. Clamp (10) for suspending a rigid catenary profile section (3) from a bracket (2) in railway transport, according to claim 3, **characterized in that** the attachment means (19, 20) comprise one single first bolt (19), for easy assembly.

5. Clamp (10) for suspending a rigid catenary profile section (3) from a bracket (2) in railway transport, according to claim 1, **characterized in that** the central sections (17, 18) have a curved shape according to hollow cylinder portions in order to embrace tubular brackets (2).

6. Clamp (10) for suspending a rigid catenary profile section (3) from a bracket (2) in railway transport, according to claim 1, **characterized in that** it additionally incorporates a second bolt (24) and a second nut (25), wherein the second bolt (24) comprises:
- a first end configured to be inserted into the upper part of a body (4) intended to house and suspend the rigid catenary profile (3) and
- a second end to pass through the prismatic base (21), and where the second nut (25) is placed, to establish a swivel joint between the body (4) and the clamp (10).

## Patentansprüche

1. Klammer (10) zur Aufhängung eines Abschnitts (3) eines starren Oberleitungsprofils von einer Halterung (2) im Schienenverkehr, die Folgendes umfasst:
ein erstes Profil (11) und ein zweites Profil (12), die beide entsprechende erste Enden (13, 14) und entsprechende zweite Enden (15, 16) sowie entsprechende zentrale Abschnitte (17, 18) besitzen, deren Form so ausgeführt ist, dass die Halterung (2) gepresst und umfasst wird, wobei diese Profile (11, 12) an deren ersten Enden (13, 14) miteinander verbunden sind, wobei die zweiten Enden (15, 16) Befestigungsmittel einschließen, um die Profile (11, 12) gegen die Halterung (2) zu pressen, wobei das erste Ende (13) des ersten Profils (11) flach ist und das erste Ende (14) des zweiten Profils (12) eine U-förmige Nut besitzt, um das erste Ende (13) des ersten Profils (11) verschiebbar aufzunehmen, **dadurch gekennzeichnet, dass** das erste Profil (11) an seinem zweiten Ende (15) eine rechteckige prismatische Basis (21) umfasst, die an ihrem freien Ende (22) dazu ausgeführt ist, sich entlang einer zu diesem Zweck am zweiten Ende (16) des zweiten Profils (12) angeordneten Führung zu bewegen.

2. Klammer (10) zur Aufhängung eines Abschnitts (3) eines starren Oberleitungsprofils von einer Halterung (2) im Schienenverkehr nach Anspruch 1, **dadurch gekennzeichnet, dass** die Befestigungsmittel (19, 20) mindestens einen ersten Bolzen (19) und eine erste Mutter (20) umfassen, wobei der erste Bolzen (19) durch die zweiten Enden (15, 16) verläuft, um zusammen mit der ersten Mutter (20) eine Kraft auszuüben, die dazu neigt, die zweiten Enden (15, 16) zusammenzubringen.

3. Klammer (10) zur Aufhängung eines Abschnitts (3) eines starren Oberleitungsprofils von einer Halterung (2) im Schienenverkehr nach Anspruch 2, **dadurch gekennzeichnet, dass** die Befestigungsmittel (19, 20) weniger als vier erste Bolzen (19) umfassen.

4. Klammer (10) zur Aufhängung eines Abschnitts (3) eines starren Oberleitungsprofils von einer Halterung (2) im Schienenverkehr nach Anspruch 3, **dadurch gekennzeichnet, dass** die Befestigungsmittel (19, 20) zur einfachen Montage einen einzigen ersten Bolzen (19) umfassen.

5. Klammer (10) zur Aufhängung eines Abschnitts (3) eines starren Oberleitungsprofils von einer Halterung (2) im Schienenverkehr nach Anspruch 1, **dadurch gekennzeichnet, dass** die zentralen Abschnitte (17, 18) eine gebogene Form entsprechend eines Hohlzylinderteils besitzen, um rohrförmige Halterungen (2) zu umfassen.

6. Klammer (10) zur Aufhängung eines Abschnitts (3) eines starren Oberleitungsprofils von einer Halterung (2) im Schienenverkehr nach Anspruch 1, **dadurch gekennzeichnet, dass** diese zusätzlich einen zweiten Bolzen (24) und eine zweite Mutter (25) umfasst, wobei der zweite Bolzen (24) Folgendes umfasst:
- ein erstes Ende, das dazu ausgeführt ist, in den oberen Teil eines Gehäuses (4) eingeführt zu werden, das dazu vorgesehen ist, das starre Oberleitungsprofil (3) aufzunehmen und zu tragen; und
- ein zweites Ende, das durch die prismatische Basis (21) verläuft und in dem die zweite Mutter (25) platziert wird, um ein Drehgelenk zwischen dem Gehäuse (4) und der Klammer (10) zu bilden.

## Revendications

1. Collier (10) de fixation d'une section d'un profilé de caténaire rigide (3) d'une console (2) dans le transport ferroviaire, comprenant :
un premier profilé (11) et un second profilé (12), chacun ayant des premières extrémités respectives (13, 14) et des secondes extrémités respectives (15, 16), ainsi que des sections centrales respectives (17, 18) dont la forme est adaptée de façon à comprimer et enlacer la console (2), lesdits profilés (11, 12) étant reliés l'un à l'autre par leurs premières extrémités (13, 14), dans lequel les secondes extrémités (15, 16) comportent des moyens de fixation pour comprimer les profilés (11, 12) contre la console (2), dans lequel la première extrémité (13) du premier profilé (11) est plate et la première extrémité (14) du second profilé (12) possède une feuillure en U pour loger en la faisant coulisser la première extrémité (13) du premier profilé (11), **caractérisé en ce que** le premier profilé (11) comprend sur sa seconde extrémité (15) une base prismatique rectangulaire (21) qui à son extrémité libre (22) est adaptée de façon à se déplacer le long d'un guide disposé à cette fin à la seconde extrémité (16) du second profilé (12).

2. Collier (10) de fixation d'une section d'un profilé de caténaire rigide (3) d'une console (2) dans le transport ferroviaire, selon la revendication 1, **caractérisé en ce que** les moyens de fixation (19, 20) comprennent au moins un premier boulon (19) et un premier écrou (20), dans lequel le premier boulon (19) traverse les secondes extrémités (15, 16) pour exercer conjointement avec le premier écrou (20) une force tendant à réunir les secondes extrémités (15, 16).

3. Collier (10) de fixation d'une section d'un profilé de caténaire rigide (3) d'une console (2) dans le transport ferroviaire, selon la revendication 2, **caractérisé en ce que** les moyens de fixation (19, 20) comprennent moins de quatre premiers boulons (19).

4. Collier (10) de fixation d'une section d'un profilé de caténaire rigide (3) d'une console (2) dans le transport ferroviaire, selon la revendication 3, **caractérisé en ce que** les moyens de fixation (19, 20) comprennent un seul premier boulon (19), pour faciliter l'assemblage.

5. Collier (10) de fixation d'une section d'un profilé de caténaire rigide (3) d'une console (2) dans le transport ferroviaire, selon la revendication 1, **caractérisé en ce que** les sections centrales (17, 18) ont une forme incurvée selon des portions de cylindre creux afin d'enlacer des consoles tubulaires (2).

6. Collier (10) de fixation d'une section d'un profilé de caténaire rigide (3) d'une console (2) dans le transport ferroviaire, selon la revendication 1, **caractérisé en ce qu'**il comporte en outre un second boulon (24) et un second écrou (25), dans lequel le second boulon (24) comprend :
- une première extrémité configurée pour être insérée dans la partie supérieure d'un corps (4) destiné à loger et à fixer le profilé de caténaire rigide (3) et
- une seconde extrémité pour traverser la base prismatique (21), et où le second écrou (25) est placé, pour créer un joint pivotant entre le corps (4) et le collier (10).
